# EUROPÄISCHE PATENTSCHRIFT

(11) **EP 0 343 615 B1**
(45) Veröffentlichungstag und Bekanntmachung des Hinweises auf die Patenterteilung: **07.07.1993**
(21) Anmeldenummer: 89109299.1
(22) Anmeldetag: 23.05.1989
(51) Int. Cl.: F16K 17/38

(54) **Gasanschlussarmatur**
Gas supply fitting
Armature de raccordement de gaz

(30) Priorität: 27.05.1988 DE 3817971
(43) Veröffentlichungstag der Anmeldung: 29.11.1989
(73) Patentinhaber: Streif, Hans, CH-6983 Magliaso/Lugano (CH)
(72) Erfinder: Müllers, Josef, D-4054 Nettetal 2 (DE)
(74) Vertreter: Stenger, Watzke & Ring Patentanwälte

(56) Entgegenhaltungen:
- US-A- 288 271
- US-A- 3 842 853
- US-A- 3 877 476
- US-A- 3 955 589
- US-A- 4 271 857
- US-A- 4 540 012

## Beschreibung

Gegenstand der Erfindung ist eine Gasanschlußarmatur für Gasschläuche entsprechend den im Oberbegriff von Anspruch 1 aufgeführten Merkmalen.

Aus der DE-A 14 29 056 ist ein Sicherheits-Schlauchanschlußhahn mit Selbstschließventil bekannt, in dem ein Ventilkörper mit einer Feder gegen einen Schmelzkörper vorgespannt ist, wobei der Ventilkörper nach dem Aufweichen des Schmelzkörpers automatisch in seine Schließstellung bewegt wird.

Ferner ist aus dem DE-Gebrauchsmuster 87 09 338 eine Sicherheits-Absperrarmatur für eine Gasleitung bekannt geworden, bei der ein Ventilkörper mit einer Feder gegen Metallhülsen vorgespannt ist, die unter einem annähernd halben rechten Winkel am Mantel des Ventilkörpers anliegen. Die Metallhülsen sind an Schmelzkörpern abgestützt, die im Brandfall schmelzen, so daß die Metallhülsen ausweichen können und den Ventilkörper in Schließrichtung freigeben. Die Bewegung des Ventilkörpers erfolgt mittels einer Führungsstange. Bei dieser bekannten Sicherheits-Absperrarmatur sind am Umfang des Ventilkörpers mindestens drei Metallhülsen als Abstützung verteilt angeordnet.

Schließlich ist aus der US-A 3 877 476 eine gattungsgemäße Gasanschlußarmatur für im Brandfall zu sichernde Gasschläuche bekannt. In einem Gehäuse ist ein Ventilkörper mit einer sich an ihm abstützenden Feder gegen einen Schmelzkörper vorgespannt, nach dessen Aufweichen durch erhöhte Temperatur der Ventilkörper automatisch mittels der Feder in seine Schließstellung bewegt wird. Eine den Ventilkörper gegen den Schmelzkörper vorspannende Führungsstange durchdringt einen das Gehäuse verschließenden Deckel, an dessen Innenseite die Feder und an dessen Außenseite der Schmelzkörper über ein Stützrohr abgestützt sind.

Davon ausgehend liegt der Erfindung die **Aufgabe** zugrunde, eine einfach konstruierte Gasanschlußarmatur mit thermischer Auslösung eines Ventilkörpers zu schaffen, die auch für nach DIN 3383 genormte Steckdosen verwendbar ist und deren Auslösezeit sehr kurz ist.

Ausgehend von den bekannten Gasanschlußarmaturen wird als technische **Lösung** die im Anspruch 1 angegebene Merkmalskombination vorgeschlagen.

Eine nach dieser technischen Lehre ausgebildete Gasanschlußarmatur hat den **Vorteil** einer sehr einfachen, kompakten und äußerst wirksamen Konstruktion. Die den Deckel durchdringende Führungsstange verbindet den Ventilkörper direkt mit dem Schmelzkörper, der mit einer Druckfeder gegen den Deckel vorgespannt ist. Sobald der Schmelzkörper erweicht, wird die Führungsstange aus ihm herausgezogen, so daß der Ventilkörper sich unter Wirkung der Druckfeder schlagartig in Schließrichtung bewegen kann. Die Auslösezeit ist sehr kurz, weil der Schmelzkörper exponiert außerhalb des eigentlichen Gehäuses angeordnet werden kann. Aufgrund ihrer kompakten Bauweise kann eine erfindungsgemäß ausgebildete Gasanschlußarmatur problemlos in den nach DIN 3383 genormten Steckdosen verwendet werden.

Bei einer praktischen Ausführungsform hat es sich als zweckmäßig erwiesen, die das Stützrohr für den Schmelzkörper umgebende Schutzhülse aus einem gut wärmeleitenden Material, beispiels weise Kupfer zu fertigen. Zur Verbesserung der Wärmeleitung können Stützrohr und Schutzhülse auch einteilig ausgebildet sein, wobei der Schmelzkörper mit der Führungsstange in die Schutzhülse eingegossen wird. Zur besseren Abstützung kann der Schmelzkörper bei dieser Ausführungsform auch an einer Erweiterung der Schutzhülse verankert werden.

Weitere Einzelheiten und Vorteile ergeben sich aus der nachfolgenden Beschreibung der zugehörigen Zeichnung, in der eine bevorzugte Ausführungsform einer erfindungsgemäß ausgebildeten-Gasanschlußarmatur Schematisch dargestellt worden ist. In der Zeichnung zeigen:

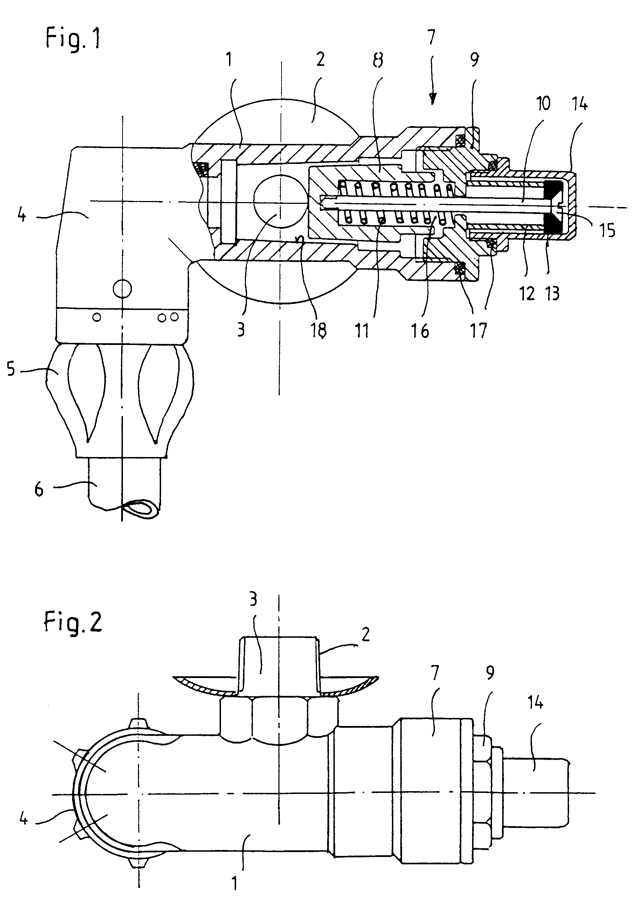

- Fig. 1: eine Gasanschlußarmatur teilweise geschnitten in Seitenansicht
- Fig. 2: dieselbe Gasanschlußarmatur in Draufsicht.

In einem Gehäuse 1 mit einem Anschlußstutzen 2 für einen Gaseintritt 3 ist auf einer Seite ein als Steckdose ausgebildets Anschlußstück 4 für die Verbindung mit einem Stecker 5 am Ende eines Gasschlauches 6 angeordnet, der zu einem Verbraucher, beispielsweise einem Gasherd führt. In dem Anschlußstück 4 ist eine nicht dargestellte und auch nicht beschriebene - Ventileinrichtung angeordnet, die mit dem Einführen des Steckers 5 geöffnet und mit dem Abziehen des Steckers 5 wieder geschlossen wird.

Auf der dem Anschlußstück 4 gegenüberliegenden Seite ist am bzw. im Gehäuse 1 ein zusätzliches Brandschutzventil 7 angeordnet, welches im wesentlichen aus einem Ventilkörper 8, einem Deckel 9, einer Führungsstange 10, einer Feder 11, einem Stützrohr 12, einem Schmelzkörper 13 und einer Schutzhülse 14 besteht.

Die Führungsstange 10 durchdringt den Deckel 9 und ist am inneren Ende mit einem Gewinde im Ventilkörper 8 verankert. Am gegenüberliegenden, äußeren Ende der Führungsstange 10 ist ein Schraubkopf 15 ausgebildet, der den Schmelzkörper 13 übergreift. Zwischen dem Ventilkörper 8 und den Deckel 9 ist in einem zylindrischen Hohlraum 16 die Feder 11 konzentrisch zur Führungsstange 10 angeordnet und vorgespannt.

Der Deckel 9 und die Schutzhülse 14 sind mit Dichtungen 17 gasdicht zum Gehäuse 1 hin befestigt.

Im Brandfall wird der Schmelzkörper 13 aufgeweicht, so daß sich der Schraubkopf 15 unter der Wirkung der Feder 11 aus seiner Abstützung herausziehen kann. Dabei wird der Ventilkörper 8 schlagartig in das Gehäuse 1 hineingedrückt und verschließt gegen einen Konus 18 den Gaseintritt 3. Danach kann kein weiteres Gas mehr ausströmen, wenn der Gasschlauch 6 durch den Brand zerstört wird.

## Patentansprüche

1. Gasanschlußarmatur für Gasschläuche (6) mit einem Stecker (5) zur Sicherung einer Gasleitung im Brandfall und mit einem Gehäuse (1), in dem ein Ventilkörper (8) mit einer Feder (11) gegen einen Schmelzkörper (13) vorgespannt ist, nach dessen Aufweichen durch erhöhte Temperatur der Ventilkörper automatisch mittels der Feder in seine Schließstellung bewegt wird, wobei der Ventilkörper gegen den Schmelzkörper mit einer Führungsstange (10) vorgespannt ist, die einen das Gehäuse verschließenden Deckel (9) durchdringt, an dessen Innenseite die Feder abgestützt ist,
dadurch gekennzeichnet,
daß der Schmelzkörper über ein Stützrohr (12) an der Außenseite des Deckels abgestützt ist, und daß der Schmelzkörper und das Stützrohr von einer am Deckel befestigten Schutzhülse (14) umgeben sind.

2. Gasanschlußarmatur nach Anspruch 1, dadurch gekennzeichnet, daß das Stützrohr und die Schutzhülse einteilig ausgebildet sind.

3. Gasanschlußarmatur nach Anspruch 2, dadurch gekennzeichnet, daß der Schmelzkörper in die Schutzhülse eingegossen und in einer Erweiterung verankert ist.

4. Gasanschlußarmatur nach Anspruch 1, dadurch gekennzeichnet, daß der Schmelzkörper aus Weichlot oder Blei besteht.

## Claims

1. Gas-connection fitting for gas hoses (6), having a plug (5) for securing a gas pipe in the event of fire and having a housing (1) in which a valve body (8) is pre-tensioned by a spring (11) against a melting body (13), after whose softening, resulting from elevated temperature, the valve body is automatically moved by means of the spring into its closing position, the valve body being pre-tensioned against the melting body by means of a guide bar (10) penetrating a lid (9) which closes off the housing and against whose inner side the spring is supported, characterised in that the melting body is supported by means of a supporting tube (12) against the outer side of the lid, and in that the melting body and the supporting tube are surrounded by a protective sleeve (14) fastened to the lid.

2. Gas-connection fitting according to Claim 1, characterised in that the supporting tube and the protective sleeve are configured in one piece.

3. Gas-connection fitting according to Claim 2, characterised in that the melting body is cast into the protective sleeve and is anchored in a widening.

4. Gas-connection fitting according to Claim 1, characterised in that the melting body consists of soft solder or lead.

## Revendications

1. Accessoire de raccordement de gaz pour tuyaux de gaz (6) avec un connecteur (5), pour la protection d'une conduite de gaz en cas d'incendie, et avec un carter (1) dans lequel un corps de soupape (8) est prétendu par un ressort (11) contre un corps fusible (13), après le ramollissement duquel, du fait d'une augmentation de température, le corps de soupape est automatiquement déplacé au moyen du ressort vers sa position de fermeture, le corps de soupape étant prétendu contre le corps fusible avec une tige de commande (10), qui traverse un couvercle (9) fermant le carter, le ressort s'appuyant contre le côté intérieur de celui-ci,
caractérisé en ce que le corps fusible prend appui par l'intermédiaire d'un tube support (12) contre la face extérieure du couvercle,
et en ce que le corps fusible et le tube support sont entourés par un manchon protecteur (14) fixé au couvercle.

2. Accessoire de raccordement de gaz selon la revendication 1, caractérisé en ce que le tube support et le manchon protecteur sont réalisés d'une seule pièce.

3. Accessoire de raccordement de gaz selon la revendication 2, caractérisé en ce que le corps fusible est coulé dans le manchon protecteur et qu'il est fixé dans un élargissement.

4. Accessoire de raccordement de gaz selon la revendication 1, caractérisé en ce que le corps fusible se compose de métal d'apport de brasage tendre ou de plomb.
